# EUROPÄISCHE PATENTSCHRIFT

(11) **EP 4 490 487 B1**
(45) Veröffentlichungstag und Bekanntmachung des Hinweises auf die Patenterteilung: **08.07.2026**
(21) Anmeldenummer: 23710671.1
(22) Anmeldetag: 07.03.2023
(51) Int. Cl.: G01M 13/022, G01M 13/025

(54) **PRÜFSTAND FÜR ANTRIEBSSTRANGELEMENTE EINES KRAFTFAHRZEUGS**
TEST STAND FOR POWERTRAIN ELEMENTS OF A MOTOR VEHICLE
BANC D'ESSAI POUR ÉLÉMENTS DE GROUPE MOTOPROPULSEUR D'UN VÉHICULE AUTOMOBILE

(30) Priorität: 08.03.2022 DE 102022202301
(43) Veröffentlichungstag der Anmeldung: 15.01.2025
(73) Patentinhaber: ZF Friedrichshafen AG, 88046 Friedrichshafen (DE)
(72) Erfinder: HELL, Christian, 94107 Untergriesbach (DE); DOLLINGER, Thomas, 94036 Passau (DE)
(74) Vertreter: ZF Friedrichshafen AG
(86) Internationale Anmeldenummer: PCT/EP2023/055650
(87) Internationale Veröffentlichungsnummer: WO 2023/170013

(56) Entgegenhaltungen:
- EP-A1- 3 628 997
- DE-T2- 69 924 994

## Beschreibung

Die Erfindung betrifft einen Prüfstand für Antriebsstrangelemente eines Kraftfahrzeugs gemäß dem Oberbegriff von Anspruch 1.

Getriebeprüfstände bzw. Antriebsstrangprüfstände zum Prüfen von Kraftfahrzeuggetrieben bzw. von vollständigen Kraftfahrzeugantriebssträngen sind aus dem Stand der Technik bekannt. Derartige Prüfstände werden üblicherweise zur Qualitätskontrolle verwendet, um Funktionsstörungen in Antriebssträngen frühzeitig durch eine Reihe von Belastungstests zu erkennen. Typische Funktionsstörungen entstehen z.B. durch spielbehaftete Bauteile, wie z. B. Zahnräder, Synchronringe, Synchronkörper, Lamellenkupplungsplatten und Wellen, die ausgelenkt und zu Schwingungen angeregt werden können. Im Rahmen einer derartigen Qualitätskontrolle werden in der Regel auch das Akustikverhalten und die Schaltqualität geprüft. Darüber hinaus finden derartige Prüfstände aber auch in der Entwicklung und stetigen Verbesserung von Kraftfahrzeugantriebssträngen Verwendung. Ebenso sind Reifenprüfstände bekannt, mittels derer die Laufeigenschaften, Kraftübertragungseigenschaften und das Akustikverhalten von Fahrzeugreifen überprüft werden können. Die Fahrzeugreifen stellen in Kraftflussrichtung die abschließenden Elemente des Fahrzeugantriebsstrangs dar, so dass ihnen ähnlich wie beispielsweise dem Fahrzeuggetriebe eine das Fahrverhalten des Fahrzeugs prägende Bedeutung zukommt.

In diesem Zusammenhang beschreibt die DE 43 28 537 C2 einen Getriebeprüfstand mit einem ersten, als Antriebsmotor dienenden Servomotor und einem zweiten, als Bremsmotor dienenden Servomotor. Der Antriebsmotor ist über eine Kupplung mit der Antriebswelle eines zu prüfenden Kraftfahrzeuggetriebes verbunden und wird u.a. hinsichtlich seiner Drehzahl über einen PC gesteuert, so dass beliebige Drehzahlverläufe simulierbar sind. Der Bremsmotor ist über eine weitere Kupplung mit einer Abtriebswelle des zu prüfenden Kraftfahrzeuggetriebes verbunden. Auch die Drehzahl des Bremsmotors wird über den PC gesteuert. Bei den vom PC simulierten Drehzahlverläufen handelt es sich um in realen Fahrversuchen gemessene Drehzahlverläufe. Somit kann das Kraftfahrzeuggetriebe gemäß der DE 43 28 537 C2 vor dem Einbau in ein Kraftfahrzeug geprüft werden.

Die DE 103 28 461 A1 offenbart einen Fahrzeugprüfstand mit einer Belastungsmaschine für jedes antreibbare Rad eines Kraftfahrzeugs. Die Belastungsmaschinen sind dabei direkt, beispielsweise über Radbolzen, oder indirekt, beispielsweise über einen Riementrieb, mit den Felgen der Kraftfahrzeugräder verbunden, so dass die Belastungsmaschinen den Antriebsstrang sowohl antreiben als auch bremsen können. Der Fahrzeugprüfstand der DE 103 28 461 A1 umfasst weiterhin eine Rahmenkonstruktion, über welche das Kraftfahrzeug und die Belastungsmaschinen angehoben und zueinander ausgerichtet werden können. Während des Prüfvorgangs wird das Kraftfahrzeug vollständig über die Rahmenkonstruktion gehalten, so dass die Fahrzeugräder keinen Bodenkontakt haben.

Aus der DE 10 2020 203 072 A1 der Anmelderin ist zudem ein Reifenprüfstand bekannt, bei dem eine einteilige Lauftrommel vorgesehen ist, auf welcher ein zu prüfender Reifen abrollen kann.

Die CN 212 567 920 U offenbart eine Getriebetestvorrichtung mit einer Werkbank, einen Antriebsmechanismus und einem Lastmechanismus. Auf der Werkbank ist eine lineare Führungsschiene angeordnet und der Antriebsmechanismus steht über einen ersten Gleitblock in gleitender Verbindung mit der linearen Führungsschiene. Der Lastmechanismus ist über einen zweiten Gleitblock gleitend mit der linearen Führungsschiene verbunden.

Aus der EP 2 198 258 B1 ist eine Antriebseinheit zur Prüfung von Getrieben bekannt, umfassend eine von einem Elektromotor antreibbare Antriebswelle, welche mit dem zu prüfenden Getriebe kuppelbar ist.

Die CN 208 887 938 beschreibt einen Fahrleistungsprüfstand mit einem Leistungsmesser, einem Sockel, einer auf dem Sockel angeordneten Gleitschiene, einem Schubmechanismus, einem Hebemechanismus und mindestens einem auf der Gleitschiene gleitend angeordneten Montagesitz. Der Schiebe-Mechanismus dient zum Schieben des Sockels, um eine Bewegung entlang der Gleitschiene zu ermöglichen. Der Hebe-Mechanismus dient zum Einstellen der Höhe zwischen einem Dynamometer und dem Untergrund.

Die DE 699 24 994 T2 offenbart ein Geräuschprüfsystem zum Prüfen eines Differentialgetriebes. Das Differentialgetriebe weist einen Rotationseingang und zwei Rotationsausgänge auf. Eine Antriebsanordnung kann mit dem Rotationseingang verbunden werden, ebenso können zwei Lastabnehmeranordnungen mit den beiden Rotationsausgängen verbunden werden. Die beiden Lastabnehmeranordnungen sind jeweils auf einem Schienensystem angeordnet, wodurch eine longitudinale Verstellbarkeit der Lastabnehmeranordnungen gegenüber dem zu prüfenden Differentialgetriebe ermöglicht wird.

Die EP 3 628 997 beschreibt einen Prüfstand zum Testen eines Prüflings mit drehmomentübertragenden Komponenten eines Antriebsstrangs eines Fahrzeugs. Der Prüfstand umfasst einen Antriebsmotor, der auf einem Träger mit einer Verstelleinheit angeordnet ist. Die Verstelleinheit umfasst ihrerseits zwei Hubstreben, welche den Antriebsmotor gegenüber einer Bodenplatte vertikal verstellen können. Zudem weist der Prüfstand der D2 einen verstellbaren Schlitten auf, der eine Verstellung des Antriebsmotors in Längsrichtung ermöglicht.

Die bekannten Prüfstände sind jedoch aus mehreren Gründen nachteilbehaftet: Zum Einen sind sie vergleichsweise groß und benötigen dadurch vergleichsweise große Aufstellflächen. Zum Anderen weisen sie einen nicht idealen Kraftfluss von den Belastungsmotoren ins Fundament des Prüfstands auf. Weiterhin nachteilig ist auch, dass eine oftmals vorgesehene, automatische Höhenverstellbarkeit beispielsweise eines Getriebeprüflings zu einem ungünstigen Schwingungsverhalten zumindest im Bereich des Prüflings führt.

Es ist eine Aufgabe der vorliegenden Erfindung, einen verbesserten Prüfstand für Antriebsstrangelemente eines Kraftfahrzeugs vorzuschlagen.

Diese Aufgabe wird erfindungsgemäß durch den Prüfstand für Antriebsstrangelemente eines Kraftfahrzeugs gemäß Anspruch 1 gelöst. Vorteilhafte Ausgestaltungen ergeben sich aus den Unteransprüchen.

Die Erfindung betrifft einen Prüfstand für Antriebsstrangelemente eines Kraftfahrzeugs,
umfassend mindestens einen elektrischen Belastungsmotor und ein Tragegestell, wobei der mindestens eine elektrische Belastungsmotor mit einer axialen Stirnseite an einer Motoraufnahme des Tragegestells angeordnet ist. Der erfindungsgemäße Prüfstand zeichnet sich dadurch aus, dass die Motoraufnahme zur Justage einer Position des mindestens einen elektrischen Belastungsmotors vertikal und/oder horizontal verstellbar ist.

Die Erfindung beschreibt also einen Prüfstand, der dazu geeignet ist, Antriebsstrangelemente eines Kraftfahrzeugs zu prüfen. Bei den Antriebsstrangelementen kann es sich um jedes im Antriebsstrang eines Kraftfahrzeugs üblicherweise vorhandene Element handeln, also beispielsweise um Antriebsaggregate, Getriebe, Kupplungen, Wellen bzw. Übersetzungsstufen. Ebenfalls als Antriebsstrangelemente im Sinne der Erfindung werden die Fahrzeugräder und Fahrzeugreifen verstanden, da diese die erzeugte Antriebsleistung abgeben und somit die letzten Elemente des Antriebsstrangs darstellen. Falls die zu prüfenden Antriebsstrangelemente Fahrzeugreifen sind, d.h. falls der erfindungsgemäße Prüfstand als Reifenprüfstand ausgebildet ist, dann kann der Belastungsmotor wahlweise den zu prüfenden Fahrzeugreifen antreiben oder auch eine Lauftrommel oder ein Laufband, worauf der zu prüfende Fahrzeugreifen abrollt.

Die zu prüfenden Antriebsstrangelemente können dabei auch zu Modulen zusammengefasst sein und modulweise geprüft werden. Ebenso kann auch vollständiger Kraftfahrzeugantriebsstrang geprüft werden.

Das jeweils zu prüfende Antriebsstrangelement bzw. Modul stellt den mittels des Prüfstands zu prüfenden Prüfling dar. Beispielsweise kann es sich beim Prüfling um ein elektrisch angetriebenes Achsmodul für ein Kraftfahrzeug handeln, welche neben dem elektrischen Antriebsmotor ein Getriebe sowie zwei Radwellen als Abtriebswellen umfasst.

Bei dem Antriebsstrang kann es sich gleichermaßen um einen elektromotorisch angetriebenen Antriebsstrang handeln wie auch um einen konventionell angetriebenen Antriebsstrang handeln.

Der erfindungsgemäße Prüfstand umfasst ein Tragegestell mit mindestens einer Motoraufnahme. Der mindestens eine Belastungsmotor ist dabei mit seiner axialen Stirnseite über die Motoraufnahme mit dem Tragegestell verbunden.

Somit ergibt sich eine vergleichsweise große Anlagefläche des mindestens einen Belastungsmotors an das vergleichsweise steife Tragegestell. Dies führt wiederum zur Vermeidung von Schwingungen insbesondere auch im Belastungsmotor sowie zu einem gegenüber dem Stand der Technik verbesserten Kraftfluss, da erzeugte Drehmomente bzw. erzeugte Kräfte unmittelbar ins Grundgestell eingeleitet werden können. Somit besteht ein klarer Kraftfluss.

Ein weiterer Vorteil der Anbindung über die axiale Stirnseite ist darin zu sehen, dass der axiale Abstand vom Belastungsmotor zum Prüfling vergleichsweise kurz ist, was wiederum die Steifigkeit der Verbindung vom Belastungsmotor zum Prüfling verbessert.

Bei der Stirnseite des Belastungsmotors, mit der er an das Grundgestell angebunden sind, handelt es sich bevorzugt um die sog. a-Seite des Belastungsmotors.

Das Tragegestell besteht vorteilhaft zumindest teilweise aus einem besonders steifen Material wie beispielsweise einem Mineralguss, insbesondere mit einer metallischen Skelettstruktur.

Weiterhin weist das Tragegestell vorteilhaft auch eine Prüflingsaufnahme auf, über welche ein zu prüfender Prüfling, beispielsweise ein Achsmodul oder eine Reifenaufnahme, mit dem Tragegestell verbunden werden kann.

Die Prüflingsaufnahme ist bevorzugt dazu ausgebildet, den Prüfling, beispielsweise das Achsmodul, automatisiert aufzunehmen und über Haltemittel besonders steif zu arretieren. Die Haltemittel können beispielsweise als automatisiert betätigbare Klemmen ausgebildet sein, welche den Prüfling fest in die Prüflingsaufnahme klemmen. Die Prüflingsaufnahme ist dabei am Tragegestell angeordnet bzw. ein Teil des Tragegestells. Um eine möglichst große Steifigkeit der Prüflingsaufnahme gewährleisten zu können, ist diese - gegenüber im Stand der Technik bekannten Prüfständen - vorteilhaft nicht höhenverstellbar ausgebildet.

Die Erfindung beschreibt somit einen hochsteifen Prüfstand zum Prüfen von Antriebsstrangelementen eines Kraftfahrzeugs, bei dem der zu prüfende Prüfling auch bei sehr hohen Drehzahlen von über 15.000 U/min betrieben werden kann, ohne dass den Prüfdurchlauf störende Schwingungen auftreten. Insbesondere bei einem elektrischen Achsmodul als Prüfling sind Drehzahlen des Antriebsmotors des Achsmoduls von über 15.000 U/min nämlich nicht unüblich, was bei bekannten Prüfständen jedoch regelmäßig zum Auftreten von den Prüfdurchlauf störenden Schwingungen führt. Durch das Getriebe des Achsmoduls wird typischerweise eine Drehzahluntersetzung erreicht, so dass die Radwellen des Achsmoduls in der Regel nur noch Drehzahlen von etwa 2.000 U/min bis etwa 2.500 U/min aufweisen.

Beim mindestens einen Belastungsmotor handelt es sich vorteilhaft um einen Elektromotor. Elektromotoren sind vergleichsweise kompaktbauend, haben insbesondere im Vergleich zu Verbrennungsmotoren ein breites Drehzahlspektrum und weisen vorteilhaft über einen weiten Drehzahlbereich das maximale Drehmoment auf.

Der mindestens eine Belastungsmotor umfasst ein Motorgehäuse, welches den Belastungsmotor einhaust. Das Motorgehäuse ist beispielsweise zylinderförmig ausgebildet.

Das Motorgehäuse kann auch eine Wasserkühlung aufweisen.

Der mindestens eine Belastungsmotor weist zudem eine Motorwelle auf, welche mit einer Welle eines zu prüfenden Getriebes oder Achsmoduls trieblich verbindbar ist. Bei der Welle des Prüflings kann es sich wahlweise um eine Eingangswellen oder um eine Ausgangswelle handeln, beispielsweise um eine Radwelle. Sofern der Prüfstand mehr als nur einen Belastungsmotor aufweist, können auch mehrere Wellen des Prüflings entsprechend mit den Wellen mehrerer Belastungsmotoren triebverbunden werden.

Somit können vom mindestens einen Belastungsmotor erzeugte Drehmomente und Drehzahlen in den Prüfling eingeleitet werden, der Prüfling kann also mit diesen Drehmomenten und Drehzahlen beaufschlagt werden. Das Drehmoment und die Drehzahl stellen gemeinsam eine mechanische Leistung dar, mit welcher der Prüfling belastet werden kann.

Unter einer trieblichen Verbindung bzw. einer Triebverbindung wird im Sinne der Erfindung eine mechanische Verbindung zur Übertragung von mechanischer Leistung verstanden. Durch die Definition, dass die Motorwellen trieblich mit den Wellen des Prüflings verbunden sind bzw. verbindbar sind, ist jedoch nicht zwingend festgelegt, dass es eine unmittelbare mechanische Verbindung, insbesondere keine drehfeste Verbindung, zwischen der ersten bzw. zweiten Motorwelle und den Wellen des Prüflings geben muss. Vielmehr kann die triebliche Verbindung im Prinzip auch ein Getriebe, beispielsweise ein Planetengetriebe, oder eine einzelne Übersetzungsstufe oder sonstige Zwischenelemente umfassen.

Erfindungsgemäß ist es nun vorgesehen, dass die Motoraufnahme zur Justage einer Position des mindestens einen elektrischen Belastungsmotors vertikal und/oder horizontal verstellbar ist. Da somit die erforderliche Höhenverstellbarkeit zur Herstellung einer Triebverbindung zwischen dem mindestens einen Belastungsmotor und dem Prüfling im Bereich des mindestens einen Belastungsmotors erfolgt, ergeben sich gegenüber dem Stand der Technik verbesserte Voraussetzungen für Schwingungs- und Akustikuntersuchungen. Da der Prüfling in der Regel, beispielsweise in einer Ausbildungsform als elektrisch antreibbares Achsmodul, sehr hohe Motordrehzahlen von über 15.000 U/min aufweisen kann, kann er die Prüflingsaufnahme prinzipiell sehr breitbandig zu Schwingungen anregen. Indem die Prüflingsaufnahme - wie erfindungsgemäß vorgesehen - jedoch nicht verstellbar und somit sehr steif ausgebildet ist und insbesondere sehr steif an das Tragegestell angebunden ist, kann hier das Auftreten von Schwingungen weitgehend vermieden werden. Stattdessen ist vorteilhaft der mindestens Belastungsmotor vertikal und horizontal zur Ausrichtung auf den Prüfling verstellbar. Da abtriebsseitig am Prüfling lediglich Drehzahlen von regelmäßig nicht mehr als 2.500 U/min auftreten, wird die Motoraufnahme auch schon deswegen in nur geringerem Maße zu Schwingungen angeregt als die Prüflingsaufnahme.

Erfindungsgemäß ist es vorgesehen, dass der Prüfstand ein Modul zur Vertikalverstellung des mindestens einen elektrischen Belastungsmotors aufweist und dass der Prüfstand ein Modul zur Horizontalverstellung des mindestens einen elektrischen Belastungsmotors aufweist. Das Modul zur Vertikalverstellung erlaubt dabei vorteilhaft eine Vertikalverstellung des mindestens einen Belastungsmotors, um diesen vertikal auf den Prüfling auszurichten und die Herstellung einer Triebverbindung vom Belastungsmotor zum Prüfling zu ermöglichen. Entsprechend ermöglicht das Modul zur Horizontalverstellung vorteilhaft eine Horizontalverstellung des mindestens einen Belastungsmotors, um diesen horizontal auf den Prüfling auszurichten und die Herstellung einer Triebverbindung vom Belastungsmotor zum Prüfling zu ermöglichen. Indem auf das Modul zur Vertikalverstellung bzw. Horizontalverstellung zurückgegriffen wird, kann der mindestens eine Belastungsmotor vorteilhaft auf einfache Weise und insbesondere stufenlos vertikal bzw. horizontal verstellt werden. Insbesondere ist es somit nicht erforderlich, den Belastungsmotor von der Motoraufnahme zu lösen und ihn anschließend je nach Bedarf vertikal oder horizontal versetzt z.B. über andere, entsprechend versetzte Schraubverbindungen wieder an der Motoraufnahme anzuordnen.

Erfindungsgemäß ist es vorgesehen, dass das Modul zur Vertikalverstellung eine erste Platte und eine zweite Platte umfasst, wobei die erste Platte und die zweite Platte überlappend angeordnet sind, wobei die erste Platte und die zweite Platte gegeneinander vertikal verstellbar sind, wobei die Motoraufnahme an der ersten Platte angeordnet ist oder das Modul zur Horizontalverstellung an der ersten Platte angeordnet ist und wobei das Tragegestell an der zweiten Platte angeordnet ist oder das Modul zur Horizontalverstellung an der zweiten Platte angeordnet ist.

Die erste Platte des Moduls zur Vertikalverstellung kann somit wahlweise mit dem Belastungsmotor oder mit dem Modul zur Horizontalverstellung verbunden werden.

Somit ist es also möglich, das Modul zur Vertikalverstellung über die zweite Platte entweder unmittelbar am Tragegestell anzuordnen oder am Modul zur Horizontalverstellung anzuordnen. An der ersten Platte kann der Belastungsmotor angebunden werden oder - sofern das Modul zur Vertikalverstellung unmittelbar am Tragegestell angeordnet ist - das Modul zur Horizontalverstellung.

Die erste und die zweite Platte des Moduls zur Vertikalverstellung weisen zudem vorteilhaft mindestens eine vertikale Führungsschiene auf, entlang der die erste Platte gegen die zweite Platte vertikal verstellt werden kann.

Die erste und die zweite Platte des Moduls zur Vertikalverstellung können beispielsweise manuell über einen Gewindetrieb oder automatisiert über einen Aktuator gegeneinander verstellbar sein.

Erfindungsgemäß ist es vorgesehen, dass das Modul zur Horizontalverstellung eine erste Platte und eine zweite Platte umfasst, wobei die erste Platte und die zweite Platte überlappend angeordnet sind, wobei die erste Platte und die zweite Platte gegeneinander horizontal verstellbar sind, wobei die Motoraufnahme an der ersten Platte angeordnet ist oder das Modul zur Vertikalverstellung an der ersten Platte angeordnet ist und wobei das Grundgestell an der zweiten Platte angeordnet ist oder das Modul zur Vertikalverstellung an der zweiten Platte angeordnet ist.

Die erste Platte des Moduls zur Horizontalverstellung kann somit wahlweise mit dem Belastungsmotor oder mit dem Modul zur Vertikalverstellung verbunden werden.

Somit ist es also möglich, das Modul zur Horizontalverstellung über die zweite Platte entweder unmittelbar am Tragegestell anzuordnen oder am Modul zur Vertikalverstellung anzuordnen. An der ersten Platte kann der Belastungsmotor angebunden werden oder - sofern das Modul zur Horizontalverstellung unmittelbar am Tragegestell angeordnet ist - das Modul zur Vertikalverstellung.

Auch die erste und die zweite Platte des Moduls zur Horizontalverstellung weisen vorteilhaft entsprechend mindestens eine horizontale Führungsschiene auf, entlang der die erste Platte gegen die zweite Platte vertikal verstellt werden kann.

Die erste und die zweite Platte des Moduls zur Horizontalverstellung können beispielsweise manuell über einen Gewindetrieb oder automatisiert über einen Aktuator gegeneinander verstellbar sein.

Die erste und die zweite Platte des Moduls zur Horizontalverstellung sowie des Moduls zur Vertikalverstellung können rund, kreisförmig, oval oder eckig ausgebildet sein.

Gemäß einer bevorzugten Ausführungsform der Erfindung ist es vorgesehen, dass das Tragegestell eine Basis und mindestens einen sich nach oben von der Basis abstreckenden Arm umfasst. Das Grundgestell ist dabei insbesondere einstückig. Daraus ergibt sich eine vergleichsweise sehr hohe Steifigkeit des Tragegestells, was das Auftreten von Schwingungen wirkungsvoll unterbindet. Die Motoraufnahme für den mindestens einen Belastungsmotor ist vorteilhaft am mindestens einen Arm abgeordnet. Sofern der Prüfstand mehr als nur einen Belastungsmotor aufweist, so ist bevorzugt für jeden Belastungsmotor ein eigener Arm mit einer eigenen Motoraufnahme vorgesehen.

Vom Belastungsmotor erzeugte Drehmomente und Kräfte werden in den Arm abgeleitet und von diesem in die Basis abgeleitet.

Gemäß einer besonders bevorzugten Ausführungsform, außerhalb des Schutzbereichs der Ansprüche, der Erfindung ist es vorgesehen, dass das Modul zur Horizontalverstellung eine erste Platte und eine zweite Platte umfasst, wobei die erste Platte und die zweite Platte überlappend angeordnete sind, wobei die erste Platte und die zweite Platte gegeneinander verstellbar sind, wobei der Arm an der ersten Platte angeordnet ist und die Basis an der zweiten Platte angeordnet ist. Die Ausbildung der ersten und der zweiten Platte des Moduls zur Horizontalverstellung entspricht in diesem Fall vorteilhaft der bereits beschriebenen Ausbildung der ersten und der zweiten Platte des Moduls zur Horizontalverstellung, jedoch unterscheidet sich in der Art der Anordnung am Tragegestell: In diesem Fall ist das Modul zur Horizontalverstellung nämlich nicht im Bereich der Motoranbindung am Tragegestell angeordnet, sondern vielmehr trennt das Modul zur Horizontalverstellung den Arm des Tragegestelle von der Basis des Tragegestells. Bei einer Horizontalverstellung des Moduls zur Horizontalverstellung wird somit nicht nur der Belastungsmotor und ggf. das Modul zur Vertikalverstellung verstellt, sondern der vollständige Arm des Tragegestells mitsamt dem Belastungsmotor und ggf. dem Modul zur Vertikalverstellung. Dies stellt eine alternativ vorteilhafte Ausführungsform zur Anordnung des Moduls zur Horizontalverstellung im Bereich der Motoranbindung dar.

Gemäß einer weiteren bevorzugten Ausführungsform der Erfindung ist es vorgesehen, dass die erste Platte und die zweite Platte des Moduls zur Horizontalverstellung mittels eines elektrischen, pneumatischen oder hydraulischen Aktuators gegeneinander verstellbar sind und /oder dass die erste Platte und die zweite Platte des Moduls zur Vertikalverstellung mittels eines elektrischen, pneumatischen oder hydraulischen Aktuators gegeneinander verstellbar sind.

Somit kann über den bzw. die Aktuatoren des Moduls zur Vertikalverstellung bzw. des Moduls zur Horizontalverstellung auf einfache Weise und automatisiert eine vertikale bzw. horizontale Ausrichtung des Belastungsmotors zu den Wellen des Prüflings erfolgen.

Ein elektrischer Aktuator umfasst bevorzugt eine elektrisch betätigbare Gewindestange und ein hydraulisch oder pneumatisch betätigbarer Aktuator umfasst bevorzugt ein pneumatisch oder hydraulisch betätigbares Zylinder-Kolben-Aggregat.

Vorteilhaft ist der jeweilige Aktuator in einem Hohlraum zwischen den aneinander anliegenden Platten des Moduls zur Horizontalverstellung bzw. des Moduls zur Vertikalverstellung angeordnet und derart an die jeweils erste Platte und die jeweils zweite Platte angebunden, dass er die zur Vertikalverstellung bzw. Horizontalverstellung erforderliche Kraft aufbringen kann und die jeweils erste Platte und die jeweils zweite Platte in der jeweiligen Position halten kann. Darüber hinaus ist es vorteilhaft denkbar, dass die jeweils erste Platte und die jeweils zweite Platte in einer Zielposition fixiert werden kann, beispielsweise mittels einer Klemmvorrichtung.

Dadurch eignet sich der Prüfstand besonders zum automatisierten und schnellen Testen einer Vielzahl von Prüflingen, beispielsweise elektrischen Achsmodulen, unmittelbar nach deren Herstellung. Eine langwierige manuelle Ausrichtung des Belastungsmotors an den Prüfling entfällt.

Gemäß einer weiteren bevorzugten Ausführungsform der Erfindung ist es vorgesehen, dass der Belastungsmotor als permanenterregte Synchronmotor mit wenigstens zwölf magnetischen Polpaaren ausgebildet ist. Derartige Synchronmotoren sind auch als sog. Synchro-Torque-Motoren bekannt. Daraus ergibt sich der Vorteil, dass der Belastungsmotor vergleichsweise kompakt und insbesondere axial kurz und langsamdrehend ausgebildet sein kann, dabei aber ein hohes Drehmoment zur Verfügung stellen kann. Insbesondere können der erste und der zweite Belastungsmotor Drehzahlen von bis zu 3.000 U/min bereitstellen. Durch diese axial vergleichsweise kurze Ausbildung ergibt sich auch der Vorteil, dass trotz der axialen Anbindung des Belastungsmotors an die Motoraufnahme keine großen Kippmomente auf den Belastungsmotor wirken, da der Massenschwerpunkt des Belastungsmotors nahe an der Anbindung an die Motoraufnahme liegt.

Vorteilhaft ist jedem Belastungsmotor ein eigener Inverter zugeordnet. Der Inverter ist beispielweise dreiphasig ausgebildet.

Durch die beschriebene Flanschanbindung und die axial kompakten Torque-Motoren ergibt sich weiterhin der Vorteil, dass der gesamte Prüfstand vergleichsweise sehr viel kleiner und kompakter als im Stand der Technik üblich ausfällt und somit auch deutlich kostengünstiger ist.

Gemäß einer besonders bevorzugten Ausführungsform der Erfindung ist es vorgesehen, dass eine Motorwelle des Belastungsmotors als Hohlwelle ausgebildet ist, in welcher eine Transferwelle drehfest angeordnet ist. Über die Transferwelle wird dann vorzugsweise die Triebverbindung zwischen der Motorwelle und dem Prüfling hergestellt, d.h. die Transferwelle ist sowohl drehfest mit den Wellen des Prüflings verbindbar, beispielsweise über eine Steckverzahnung, als auch drehfest mit de Hohlwelle des Belastungsmotors, beispielsweise ebenfalls über eine Steckverzahnung, über eine Flanschverbindung oder über ein anderes geeignetes Verbindungselement.

Gemäß einer ganz besonders bevorzugten Ausführungsform der Erfindung ist es vorgesehen, dass die Transferwelle über einen Drehmomentsensor drehfest mit der Motorwelle verbunden ist. Der Drehmomentsensor stellt also das Verbindungselement dar, über welches die Motorwelle, welche ja als Hohlwellen ausgebildet ist, mit der Transferwelle in ihrem Inneren drehfest verbunden ist. Dadurch wird das vom Belastungsmotor bereitgestellte Drehmoment also vollständig über den Drehmomentsensor geführt. Der Drehmomentsensor stellt also nicht nur die Triebverbindung zwischen der Hohlwelle und der Transferwelle dar, sondern erfasst auch das bereitgestellte Drehmoment vollständig. Durch diese Anordnung des Drehmomentsensors kann weiterhin der kompakte Aufbau des Prüfstands unterstützt werden.

Der Drehmomentsensor umfasst bevorzugt ein oder mehrere kraftsensitive Elemente, insbesondere einen oder mehrere Dehnmessstreifen, welche zunächst eine am kraftsensitiven Element wirkende Kraft bzw. an den mehreren kraftsensitiven Elementen wirkenden Kräfte erfassen. Über die Geometrie des Drehmomentsensors kann dann aus der erfassten Kraft bzw. den erfassten Kräften das jeweils wirkende Drehmoment bestimmt werden.

Gemäß einer weiteren ganz besonders bevorzugten Ausführungsform der Erfindung ist es vorgesehen, dass der Drehmomentsensor an einer dem Prüfling abgewandten Stirnseite des Belastungsmotors angeordnet ist. Das bedeutet also, dass der Drehmomentsensor an der sog. b-Seite des Belastungsmotors angeordnet ist.

Nachfolgend wird die Erfindung anhand von in den Figuren dargestellten Ausführungsformen beispielhaft erläutert.

Es zeigen:
- Fig. 1: beispielhaft und schematisch eine mögliche Ausführungsform eines erfindungsgemäßen Prüfstands für einen Antriebsstrang eines Kraftfahrzeugs, außerhalb des Schutzbereichs der Ansprüche,
- Fig. 2: beispielhaft und schematisch eine weitere mögliche Ausführungsform eines erfindungsgemäßen Prüfstands für einen Antriebsstrang eines Kraftfahrzeugs,
- Fig. 3: beispielhaft und schematisch eine weitere mögliche Ausführungsform eines erfindungsgemäßen Prüfstands für einen Antriebsstrang eines Kraftfahrzeugs, außerhalb des Schutzbereichs der Ansprüche,
- Fig. 4: beispielhaft und schematisch eine weitere mögliche Ausführungsform eines erfindungsgemäßen Prüfstands für einen Antriebsstrang eines Kraftfahrzeugs,
- Fig. 5: beispielhaft und schematisch einen Belastungsmotor, der an einer Motoraufnahme des Prüfstands angeordnet ist, außerhalb des Schutzbereichs der Ansprüche,
- Fig. 6.: Den Belastungsmotor sowie die Motoraufnahme der Fig. 5, jedoch ist gemäß Fig. 6 zusätzlich ein Modul zur Horizontalverstellung vorgesehen und
- Fig. 7: beispielhaft einen Belastungsmotor, bei dem der Drehmomentsensor nicht auf der b-Seite, sondern auf der dem Prüfling zugewandten Seite, der sog. a-Seite, angeordnet ist.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

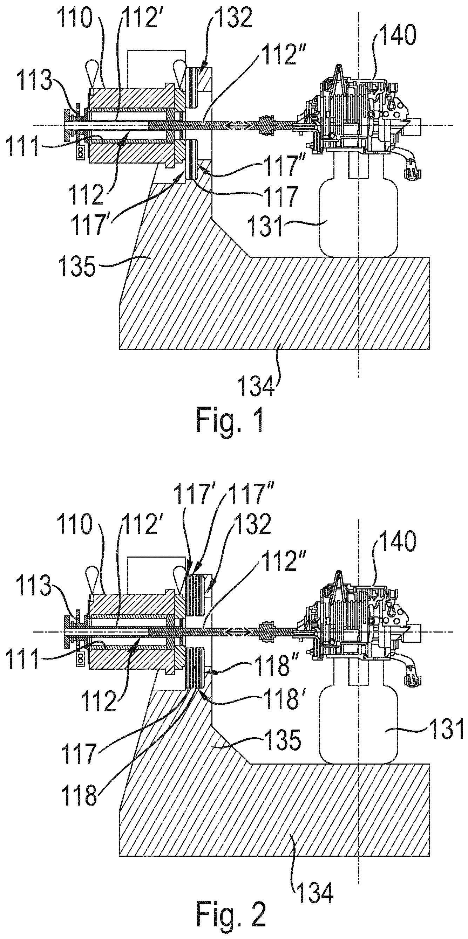

Fig. 1 zeigt beispielhaft und schematisch eine mögliche Ausführungsform eines erfindungsgemäßen Prüfstands 100 für einen Antriebsstrang eines (in Fig. 1 nicht dargestellten) Kraftfahrzeugs, die nicht in den Schutzbereich der Ansprüche fällt. Der Prüfstand 100 umfasst einen elektrischen Belastungsmotor 110, ein Tragegestell und eine Prüflingsaufnahme 131 zur Aufnahme eines Prüflings 140.

Bei dem Prüfling 140 handelt es sich beispielsgemäß um ein elektrisches Achsmodul, das neben einem elektrischen Antriebsmotor auch ein Getriebe und zwei Radwellen umfasst. Der Prüfling 140 ist auf der Prüflingsaufnahme 131 montiert. Die Prüflingsaufnahme 131 ist fest und damit sehr steif an die Basis 134 des Grundgestells angebunden.

Anstelle eines elektrischen Achsmoduls könnte ebenso gut ein Fahrzeugreifen als Prüfling 140 herangezogen werden, wobei der Prüfstand 100 in diesem Fall noch eine Abrollfläche für den Fahrzeugreifen aufweisen würde.

Der Belastungsmotor 110 ist beispielsgemäß als Elektromotor ausgebildet, nämlich als permanenterregter Synchronmotor mit zwölf magnetischen Polpaaren. Derartige Synchronmotoren sind auch als sog. Synchro-Torque-Motoren bekannt. Wie zu sehen ist, ist der Belastungsmotor 110 dadurch vergleichsweise kompakt und axial kurz ausgebildet. Dennoch kann er ein vergleichsweise hohes Drehmoment zur Verfügung stellen.

Das Tragegestell weist weiterhin eine Motoraufnahme 132 zur Aufnahme des Belastungsmotors 110 auf. Beispielsgemäß handelt es sich bei der Motoraufnahme 132 um eine Flanschverbindung, über die der Belastungsmotor 110 mit seiner dem Prüfling 140 zugewandten axialen Stirnseite, der sog. a-Seite, an das Tragegestell angeflanscht ist. Der Belastungsmotor 110 ist dabei über die Motoraufnahme 132 an einem Schenkel 135 des Tragegestells angeordnet.

Eine Motorwelle 111 des Belastungsmotors 110 ist beispielsgemäß als ausfahrbare bzw. verlängerbare Hohlwelle 111 ausgebildet, in welcher eine axial ausfahrbare Transferwelle 112 angeordnet ist. Die Tranfserwelle 112 umfasst ihrerseits eine Hohlwelle 112' und einen aus der Hohlwelle 112' ausfahrbaren Wellenschaft 112". Durch Ausfahren des Wellenschafts 112" aus der Hohlwelle 112' kann eine Triebverbindung mit dem Prüfling 140 hergestellt werden.

Die Transferwelle 112 ist dabei beispielsgemäße über einen Drehmomentsensor 113 drehfest und axialfest mit der ersten Motorwelle 111 verbunden. Da somit das vom Belastungsmotor 110 bereitgestellte Drehmoment über den Drehmomentsensor 113 geführt wird, kann über den Drehmomentsensor 113 jederzeit das vom Belastungsmotor 110 erzeugte Drehmoment zuverlässig erfasst werden. Wie zu sehen ist, ist der Drehmomentsensor 113 an der sog. b-Seite des Belastungsmotors 110 angeordnet. Im Gegensatz zu einer Anordnung an der a-Seite kann der Belastungsmotor 110 somit sehr dicht an der Motoraufnahme 132 angeordnet werden, was sich vorteilhaft auf die Steifigkeit der Anbindung sowie auf ein auf den Belastungsmotor 110 wirkendes Kippmoment auswirkt.

Die Motoraufnahme 132 ist zudem zur Justage einer Position des Belastungsmotors 110 mittels eines Moduls zur Vertikalverstellung 117 vertikal verstellbar.

Das Modul zur Vertikalverstellung 117 umfasst eine erste Platte 117' und eine zweite Platte 117", die beispielgemäß axial hintereinander und dementsprechend axial überlappend angeordnet sind, wobei die erste Platte 117' und die zweite Platte 117" gegeneinander vertikal verstellbar sind. Beispielsgemäß ist die Motoraufnahme 132 an der ersten Platte 117' angeordnet und die zweite Platte 117" ist am Tragegestell angeordnet. Da die erste Platte 117' gegen die zweite Platte 117" vertikal verstellbar ist, kann der Belastungsmotor 110 auf einfache Weise vertikal zum Prüfling 140 ausgerichtet werden. Bei einer vertikalen Verschiebung der ersten Platte 117' gegen die zweite Platte 117" verschiebt sich der fest an der ersten Plate 117' angeordnete Belastungsmotor 110 gemeinsam mit der ersten Platte 117' gegenüber der zweiten Platte 117" und somit gegenüber dem Tragegestell und dem Prüfling 140.

Um eine präzise Vertikalverstellung zu ermöglichen, weisen die erste und die zweite Platte 117', 117" des Moduls zur Vertikalverstellung 117 eine vertikale Führungsschiene (nicht dargestellt in Fig. 1) auf, entlang der die erste Platte 117' gegen die zweite Platte 117" vertikal verstellt werden kann.

Das Modul zur Vertikalverstellung 117 umfasst beispielsgemäß weiterhin einen hydraulischen Aktuator (nicht dargestellt in Fig. 1), der in einem Hohlraum zwischen den aneinander anliegenden Platten 117', 117" des Moduls zur Vertikalverstellun117 angeordnet ist und derart an die erste Platte 117' und die zweite Platte 117" angebunden ist, dass er die zur Vertikalverstellung erforderliche Kraft auf die erste Platte 117' und die zweite Platte 117" aufbringen kann. Beispielsgemäß ist der Aktuator als hydraulisch betätigbares Zylinder-Kolben-Aggregat ausgebildet.

Somit kann über den Aktuator des Moduls zur Vertikalverstellung 117 auf einfache Weise und automatisiert eine Ausrichtung des Belastungsmotors 110 zu den Wellen des Prüflings 140 erfolgen.

Fig. 2 zeigt beispielhaft und schematisch eine weitere mögliche Ausführungsform eines erfindungsgemäßen Prüfstands 100 für einen Antriebsstrang eines (in Fig. 2 nicht dargestellten) Kraftfahrzeugs.

Der Prüfstand 100 der Fig. 2 unterscheidet sich vom Prüfstand 100 der Fig. 1 durch das zusätzliche Vorhandensein eines Moduls zur Horizontalverstellung 118. Das Modul zur Horizontalverstellung 118 besteht beispielsgemäß - wie das Modul zur Vertikalverstellung 117 - aus einer ersten Platte 118' und eine zweite Platte 118", die beispielgemäß axial hintereinander und dementsprechend axial überlappend angeordnet sind, wobei die erste Platte 118' und die zweite Platte 118" in diesem Fall gegeneinander horizontal verstellbar sind.

Beispielsgemäß ist die zweite Platte 117' des Moduls zur Vertikalverstellung mittels einer Flanschverbindung an der ersten Platte 118' des Moduls zur Horizontalverstellung 188 angeordnet. Die zweite Platte 118" ist am Tragegestell angeordnet, ebenfalls über eine Flanschverbindung. Da die erste Platte 118' gegen die zweite Platte 117" horizontal verstellbar ist, kann der Belastungsmotor 110 mitsamt dem Modul zur Vertikalverstellung 117 somit horizontal zum Prüfling 140 ausgerichtet werden. Bei einer horizontalen Verschiebung der ersten Platte 118' gegen die zweite Platte 118" verschiebt sich das fest an der ersten Plate 118' angeordnete Modul zur Vertikalverstellung 117 sowie der am Modul zur Vertikalverstellung 117 angeordnete Belastungsmotor 110.

Beispielsgemäß weisen die erste und die zweite Platte 118', 118" des Moduls zur Horizontalverstellung 118 eine vertikale Führungsschiene (nicht dargestellt in Fig. 2) auf, entlang der die erste Platte 118' gegen die zweite Platte 118" vertikal verstellt werden kann.

Das Modul zur Horizontalverstellung 118 umfasst beispielsgemäß weiterhin einen hydraulischen Aktuator (nicht dargestellt in Fig. 2), der in einem Hohlraum zwischen den aneinander anliegenden Platten 118', 118" des Moduls zur Horizontalverstellung 118 angeordnet ist und derart an die erste Platte 118' und die zweite Platte 118" angebunden ist, dass er die zur Horizontalverstellung erforderliche Kraft auf die erste Platte 118' und die zweite Platte 118" aufbringen kann. Beispielsgemäß ist auch der Aktuator des Moduls zur Horizontalverstellung 118 als hydraulisch betätigbares Zylinder-Kolben-Aggregat ausgebildet.

Somit kann der Belastungsmotor 110 sowohl horizontal als auch vertikal automatisiert zum Prüfling 140 ausgerichtet werden.

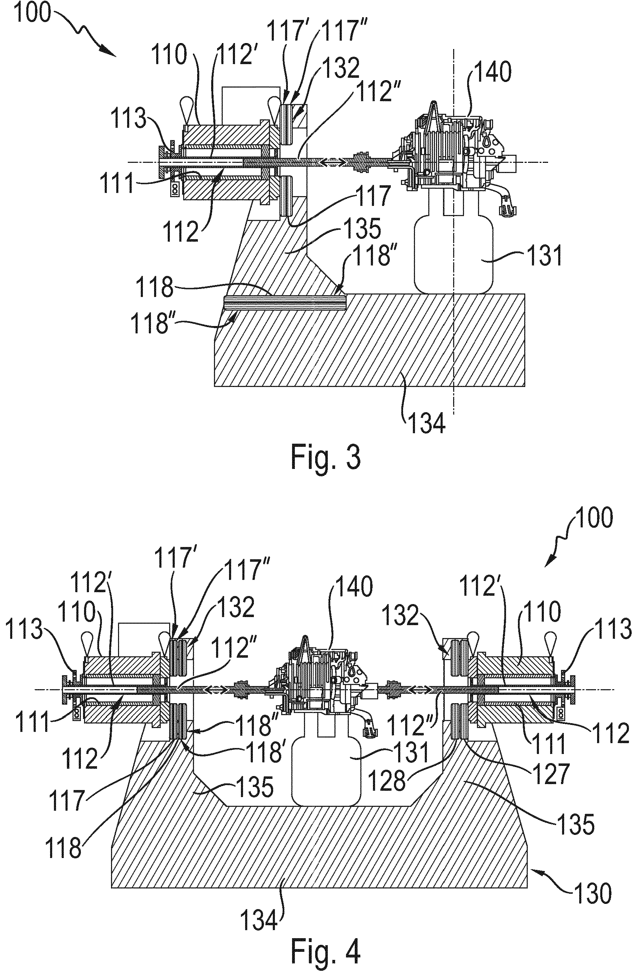

Fig. 3 zeigt beispielhaft und schematisch eine weitere mögliche Ausführungsform eines erfindungsgemäßen Prüfstands 100 für einen Antriebsstrang eines (in Fig. 1 nicht dargestellten) Kraftfahrzeugs.

Der Prüfstand 100 der Fig. 3, der nicht in den Schutzbereich der Ansprüche fällt, unterscheidet sich vom Prüfstand 100 der Fig. 2 dadurch, dass das Modul zur Horizontalverstellung 118 nicht am Modul zur Vertikalverstellung 117 im Bereich der Motoraufnahme 132 angeordnet ist, sondern zwischen einem Arm 135 und einer Basis134 des Tragegestells angeordnet ist. Auch in diesem Fall ermöglicht das Modul zur Horizontalverstellung 118 eine eindimensionale Verstellbarkeit in einer horizontalen Ebene.

Das Modul zur Horizontalverstellung 118 besteht auch im Ausführungsbeispiel der Fig. 3 aus einer ersten Platte 118' und einer zweiten Platte 118", die gegeneinander horizontal verstellbar sind. Die erste Platte 118' ist beispielsgemäß mit dem Arm 135 verbunden, während die zweite Platte 118" beispielsgemäß mit der Basis 134 verbunden ist. Über eine Betätigung des Moduls zur Horizontalverstellung 118 kann somit der Arm 135 mitsamt der ersten Platte 118' gegenüber der Basis 134 mitsamt der zweiten Platte 118" horizontal verschoben werden, um eine horizontale Ausrichtung des Belastungsmotors 110 zum Prüfling 140 zu ermöglichen.

Beispielsgemäß weisen die erste und die zweite Platte 118', 118" des Moduls zur Horizontalverstellung 118 auch in diesem Fall eine vertikale Führungsschiene (nicht dargestellt in Fig. 2) auf, entlang der die erste Platte 118' gegen die zweite Platte 118" vertikal verstellt werden kann.

Das Modul zur Horizontalverstellung 118 umfasst beispielsgemäß weiterhin einen hydraulischen Aktuator (nicht dargestellt in Fig. 3), der in einem Hohlraum zwischen den aneinander anliegenden Platten 118', 118" des Moduls zur Horizontalverstellung 118 angeordnet ist und derart an die erste Platte 118' und die zweite Platte 118" angebunden ist, dass er die zur Horizontalverstellung erforderliche Kraft auf die erste Platte 118' und die zweite Platte 118" aufbringen kann. Beispielsgemäß ist auch der Aktuator des Moduls zur Horizontalverstellung 118 als hydraulisch betätigbares Zylinder-Kolben-Aggregat ausgebildet.

Fig. 4 zeigt beispielhaft und schematisch eine weitere mögliche Ausführungsform eines erfindungsgemäßen Prüfstands 100 für einen Antriebsstrang eines Kraftfahrzeugs (in Fig. 3 nicht dargestellt).

Der Prüfstand 100 der Fig. 4 unterscheidet sich vom Prüfstand 100 der Fig. 2 nur dadurch, dass das Tragegestell 130 zwei Arme 135 aufweist, an denen über zwei Motoraufnahmen 132 auch zwei Belastungsmotoren 110 angeordnet sind. Beide Belastungsmotoren 110 können über jeweils ein Modul zur Vertikalverstellung 117 und ein Modul zur Horizontalverstellung 118 sowohl vertikal als auch horizontal auf den Prüfling 140 ausgerichtet werden.

Da gemäß dem Ausführungsbeispiel der Fig. 4 zwei Belastungsmotoren 110 vorgesehen sind, können dementsprechend auch zwei Wellen des Prüflings 140 belastet werden, beispielsweise die Radwellen.

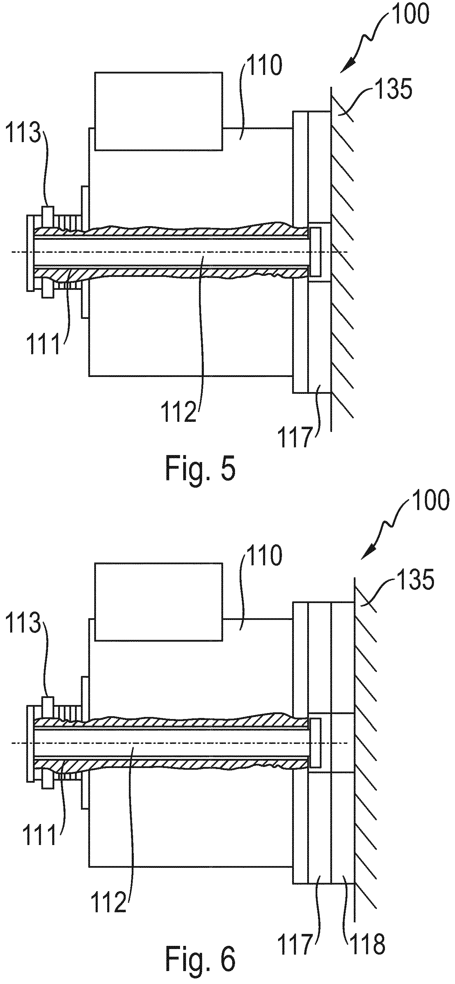

Außerhalb des Schutzbereichs der Ansprüche, zeigt Fig. 5 beispielhaft und schematisch einen Belastungsmotor 110, der an einer Motoraufnahme 132 des Prüfstands 100 angeordnet ist. Die Motoraufnahme ist beispielsgemäß als Flanschverbindung ausgebildet und befindet sich ihrerseits an einer ersten Platte eines Moduls zur Vertikalverstellung 117. Eine zweite Platte des Moduls zur Vertikalverstellung 117 ist an einem Arm 135 (in Fig. 5 nur ansatzweise dargestellt) des Tragegestells 130 angeordnet. Dadurch kann der Belastungsmotor 110 mit der ersten Platte des Moduls zur Vertikalverstellung 117 gegenüber dem Arm 135 des Tragegestells 130 und der zweiten Platte des Moduls zur Vertikalverstellung 117 vertikal verstellt werden.

Wie in Fig. 5 weiterhin zu sehen ist, ist die Motorwelle 111 des Belastungsmotors 110 als Hohlwelle 111 ausgebildet, in welcher die axial ausfahrbare Transferwelle 112 angeordnet ist. Die Transferwelle 112 ist über den Drehmomentsensor 113 drehfest und axialfest mit der ersten Motorwelle 111 verbunden. Der Drehmomentsensor 113 ist an der dem Prüfling 140 (nicht dargestellt in Fig. 5) abgewandten Seite des Belastungsmotors 110 angeordnet, nämlich der sog. b-Seite. Daraus ergibt sich der Vorteil, dass der Belastungsmotor 110 sehr dicht an der Motoraufnahme angeordnet werden kann, was sich vorteilhaft auf die Steifigkeit der Anbindung sowie auf das auf den Belastungsmotor 110 aufgrund der Schwerkraft wirkende Kippmoment auswirkt.

Fig. 6 zeigt den Belastungsmotor 110 sowie die Motoraufnahme der Fig. 5, jedoch ist gemäß Fig. 6 zusätzlich ein Modul zur Horizontalverstellung 118 vorgesehen. Das Modul zur Horizontalverstellung 118 besteht aus einer ersten Platte und eine zweite Platte, die axial hintereinander und dementsprechend axial überlappend angeordnet sind, wobei die erste Platte und die zweite Platte gegeneinander horizontal verstellbar sind.

Die erste Platte des des Moduls zur Horizontalverstellung 118 ist mit der zweiten Platte des Moduls zur Vertikalverstellung verbunden und die zweite Platte des Moduls zur Horizontalverstellung 118 ist mit dem Arm 135 des Tragegestells 130 verbunden. Somit kann der Belastungsmotor 110 über das Modul zur Horizontalverstellung 118 und das Modul zur Vertikalverstellung 117 sowohl vertikal als auch horizontal auf den Prüfling 140 (nicht dargestellt in Fig. 6) ausgerichtet werden.

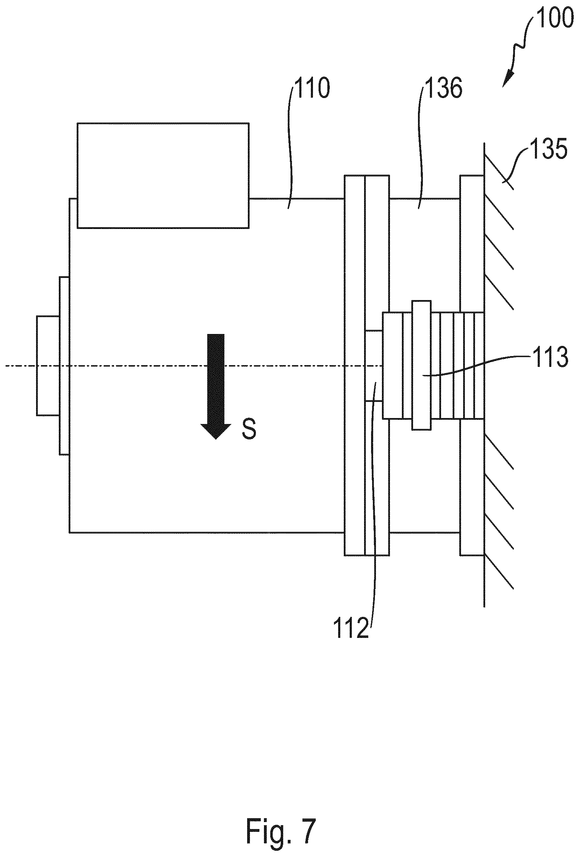

Fig. 7 zeigt beispielhaft einen Belastungsmotor 110, bei dem der Drehmomentsensor 113 nicht auf der b-Seite, sondern auf der dem Prüfling 140 (nicht dargestellt in Fig. 7) zugewandten Seite, der sog. a-Seite, angeordnet ist.

Da für den Drehmomentsensor 113 auf der a-Seite der erforderliche Bauraum bereitgestellt werden muss, ist der Belastungsmotor 110 durch eine Zylinderhülse 136 von der Motoraufnahme beabstandet. Dadurch verringert sich die Steifigkeit der Triebverbindung zum Prüfling 140. Gleichzeitig erhöht sich das aufgrund der Schwerkraft auf den Belastungsmotor 110 wirkende Kippmoment.

Die Zylinderhülse 136 kann beispielsweise an beiden Axialseiten eine Flanschverbindung aufweisen, um eine feste und steife Verbindung zwischen dem

Belastungsmotor 110 und der Motoraufnahme herstellen zu können. Alternativ kann die Zylinderhülse 136 auch einstückig mit dem Arm 135 des Tragegestells 130 sein und an ihrer dem Belastungsmotor 110 zugewandten Axialseite die Motoraufnahme aufweisen. Nochmals alternativ kann die Zylinderhülse 136 auch einstückig mit dem Belastungsmotor 110 bzw. mit dem Gehäuse des Belastungsmotors 110 ausgebildet sein und mit der Motoraufnahme verbindbar sein, beispielsweise mittels einer Flanschverbindung.

### Bezugszeichen

- 100: Prüfstand

- 110: Belastungsmotor
- 111: Motorwelle
- 112: Transferwelle
- 112': Hohlwelle
- 112": Wellenschaft
- 113: erster Drehmomentsensor
- 117: Modul zur Vertikalverstellung
- 117': erste Platte der Moduls Vertikalverstellung
- 117": zweite Platte der Moduls Vertikalverstellung
- 118: Modul zur Horizontalverstellung
- 118': erste Platte der Moduls Horizontalverstellung
- 118": zweite Platte der Moduls Horizontalverstellung

- 130: Tragegestell
- 131: Prüflingsaufnahme
- 132: Motoraufnahme
- 134: Basis des Tragegestells
- 135: Arm des Tragegestells
- 136: Zylinderhülse

- 140: Prüfling

## Patentansprüche

1. Prüfstand (100) für einen Antriebsstrang eines Kraftfahrzeugs,
umfassend mindestens einen elektrischen Belastungsmotor (110) und ein Tragegestell (130),
wobei der mindestens eine elektrische Belastungsmotor (110) mit einer axialen Stirnseite an einer Motoraufnahme (132) des Tragegestells (130) angeordnet ist,
wobei
die Motoraufnahme (132) zur Justage einer Position des mindestens einen elektrischen Belastungsmotors (11) vertikal und horizontal verstellbar ist und
wobei der Prüfstand (100) ein Modul zur Horizontalverstellung (118) des mindestens einen elektrischen Belastungsmotors (110) aufweist,
**dadurch gekennzeichnet, dass** der Prüfstand (100) ein Modul zur Vertikalverstellung (117) des mindestens einen elektrischen Belastungsmotors (110) aufweist,
wobei das Modul zur Vertikalverstellung (117) eine erste Platte (117') und eine zweite Platte (117") umfasst, wobei die erste Platte (117') und die zweite Platte (117") axial hintereinander und dementsprechend axial überlappend angeordnet sind, wobei die erste Platte (117') und die zweite Platte (117") gegeneinander vertikal verstellbar sind,
wobei die Motoraufnahme (132) an der ersten Platte (117') angeordnet ist oder das Modul zur Horizontalverstellung (118) an der ersten Platte (117') angeordnet ist und wobei das Tragegestell (130) an der zweiten Platte (117") angeordnet ist oder das Modul zur Horizontalverstellung (118) an der zweiten Platte (117") angeordnet ist, wobei das Modul zur Horizontalverstellung (118) eine erste Platte (118') und eine zweite Platte (118") umfasst, wobei die erste Platte (118') und die zweite Platte (118") axial hintereinander und dementsprechend axial überlappend angeordnet sind, wobei die erste Platte (118') und die zweite Platte (118") gegeneinander horizontal verstellbar sind,
wobei die Motoraufnahme (132) an der ersten Platte (118') angeordnet ist oder das Modul (117) zur Vertikalverstellung an der ersten Platte (118') angeordnet ist und wobei das Tragegestell (130) an der zweiten Platte (118") angeordnet ist oder das Modul zur Vertikalverstellung (117) an der zweiten Platte (118") angeordnet ist.

2. Prüfstand (100) nach Anspruch 1 ,
**dadurch gekennzeichnet, dass** das Tragegestell (130) eine Basis (134) und mindestens einen sich nach oben von der Basis (134) abstreckenden Arm (135) umfasst.

3. Prüfstand (100) nach Anspruch 2,
**dadurch gekennzeichnet, dass** die Motoraufnahme (132) am mindestens einen Arm (135) angeordnet ist.

4. Prüfstand (100) nach einem der Ansprüche 1 bis 3, **dadurch gekennzeichnet, dass** die erste Platte (118') und die zweite Platte (118") des Moduls zur Horizontalverstellung (118) mittels eines elektrischen, pneumatischen oder hydraulischen Aktuators gegeneinander verstellbar sind und /oder dass die erste Platte (117') und die zweite Platte (117") des Moduls zur Vertikalverstellung (117) mittels eines elektrischen, pneumatischen oder hydraulischen Aktuators gegeneinander verstellbar sind.

5. Prüfstand (100) nach mindestens einem der Ansprüche 1 bis 4, **dadurch gekennzeichnet, dass** der Belastungsmotor (110) als permanenterregter Synchronmotor mit wenigstens zwölf magnetischen Polpaaren ausgebildet ist.

6. Prüfstand (100) nach Anspruch 5, **dadurch gekennzeichnet, dass** eine Motorwelle (111) des Belastungsmotors als Hohlwelle ausgebildet ist, in welcher eine Transferwelle (112) drehfest angeordnet ist.

7. Prüfstand (100) nach Anspruch 6,
**dadurch gekennzeichnet, dass** die Transferwelle (112) über einen Drehmomentsensor (113) drehfest mit der Motorwelle (111) verbunden ist.

8. Prüfstand (100) nach Anspruch 7,
**dadurch gekennzeichnet, dass** der Drehmomentsensor (113) an einer dem Prüfling (140) abgewandten Stirnseite des ersten Belastungsmotors (110) angeordnet ist.

## Claims

1. Test stand (100) for a drive train of a motor vehicle,
comprising at least one electric load motor (110) and a support frame (130),
wherein the at least one electric load motor (110) is arranged with an axial end side on a motor receptacle (132) of the support frame (130),
wherein
the motor receptacle (132) is vertically and horizontally adjustable for adjusting a position of the at least one electric load motor (11), and
wherein the test stand (100) has a module for vertical adjustment (118) of the at least one electric load motor (110),
**characterized in that** the test stand (100) has a module for vertical adjustment (117) of the at least one electric load motor (110),
wherein the module for vertical adjustment (117) comprises a first plate (117') and a second plate (117"), wherein the first plate (117') and the second plate (117") are arranged axially one behind the other and accordingly axially overlapping, wherein the first plate (117') and the second plate (117") are vertically adjustable with respect to one another,
wherein the motor receptacle (132) is arranged on the first plate (117') or the module for horizontal adjustment (118) is arranged on the first plate (117') and wherein the support frame (130) is arranged on the second plate (117") or the module for horizontal adjustment (118) is arranged on the second plate (117"), wherein
the module for horizontal adjustment (118) comprises a first plate (118') and a second plate (118"), wherein the first plate (118') and the second plate (118") are arranged axially one behind the other and accordingly axially overlapping, wherein the first plate (118') and the second plate (118") are adjustable horizontally with respect to one another,
wherein the motor receptacle (132) is arranged on the first plate (118') or the module for vertical adjustment (117) is arranged on the first plate (118') and wherein the support frame (130) is arranged on the second plate (118") or the module for vertical adjustment (117) is arranged on the second plate (118").

2. Test stand (100) according to Claim 1,
**characterized in that** the support frame (130) comprises a base (134) and at least one arm (135) extending upward from the base (134).

3. Test stand (100) according to Claim 2,
**characterized in that** the motor receptacle (132) is arranged on the at least one arm (135).

4. Test stand (100) according to any one of Claims 1 to 3,
**characterized in that** the first plate (118') and the second plate (118") of the module for horizontal adjustment (118) are adjustable with respect to one another by means of an electric, pneumatic or hydraulic actuator and/or
that the first plate (117') and the second plate (117") of the module for vertical adjustment (117) are adjustable with respect to one another by means of an electric, pneumatic or hydraulic actuator.

5. Test stand (100) according to at least one of Claims 1 to 4,
**characterized in that** the load motor (110) is designed as a permanently excited synchronous motor with at least twelve magnetic pole pairs.

6. Test stand (100) according to Claim 5,
**characterized in that** a motor shaft (111) of the load motor is designed as a hollow shaft, in which a transfer shaft (112) is arranged in a rotationally fixed manner.

7. Test stand (100) according to Claim 6,
**characterized in that** the transfer shaft (112) is connected to the motor shaft (111) in a rotationally fixed manner via a torque sensor (113).

8. Test stand (100) according to Claim 7,
**characterized in that** the torque sensor (113) is arranged on an end side of the first load motor (110) facing away from the test object (140).

## Revendications

1. Banc d'essai (100) pour une chaîne cinématique d'un véhicule à moteur,
comprenant au moins un moteur de charge électrique (110) et un cadre de support (130),
l'au moins un moteur de charge électrique (110) étant disposé par une face frontale axiale sur un logement de moteur (132) du cadre de support (130),
wobei
le logement de moteur (132) pouvant être ajusté verticalement et horizontalement pour régler une position de l'au moins un moteur de charge électrique (11) et
le banc d'essai (100) comportant un module d'ajustement horizontal (118) de l'au moins un moteur de charge électrique (110),
**caractérisé en ce que** le banc d'essai (100) comporte un module d'ajustement vertical (117) de l'au moins un moteur de charge électrique (110),
le module d'ajustement vertical (117) comprenant une première plaque (117') et une deuxième plaque (117"), la première plaque (117') et la deuxième plaque (117") étant disposées de manière à se chevaucher axialement l'une derrière l'autre et axialement en conséquence, la première plaque (117') et la deuxième plaque (117") pouvant être ajustées verticalement l'une à l'encontre de l'autre,
le logement de moteur (132) étant disposé sur la première plaque (117') ou le module d'ajustement horizontal (118) étant disposé sur la première plaque (117') et le cadre de support (130) étant disposé sur la deuxième plaque (117") ou le module d'ajustement horizontal (118) étant disposé sur la deuxième plaque (117"),
wobei
le module d'ajustement horizontal (118) comprenant une première plaque (118') et une deuxième plaque (118"), la première plaque (118') et la deuxième plaque (118") étant disposées de manière à se chevaucher l'une derrière l'autre et axialement en conséquence, la première plaque (118') et la deuxième plaque (118") pouvant être ajustées horizontalement l'une à l'encontre l'autre,
le logement de moteur (132) étant disposé sur la première plaque (118') ou le module d'ajustement vertical (117) étant disposé sur la première plaque (118') et le cadre de support (130) étant disposé sur la deuxième plaque (118") ou le module d'ajustement vertical (117) étant disposé sur la deuxième plaque (118").

2. Banc d'essai (100) selon la revendication 1,
**caractérisé en ce que** le cadre de support (130) comprend une base (134) et au moins un bras (135) s'étendant vers le haut depuis la base (134).

3. Banc d'essai (100) selon la revendication 2,
**caractérisé en ce que** le logement de moteur (132) est disposé sur l'au moins un bras (135).

4. Banc d'essai (100) selon au moins l'une des revendications 1 à 3,
**caractérisé en ce que** la première plaque (118') et la deuxième plaque (118") du module d'ajustement horizontal (118) peuvent être ajustées l'un à l'encontre de l'autre au moyen d'un actionneur électrique, pneumatique ou hydraulique et/ou
que la première plaque (117') et la deuxième plaque (117") du module d'ajustement vertical (117) peuvent être ajustées l'une à l'encontre de l'autre au moyen d'un actionneur électrique, pneumatique ou hydraulique.

5. Banc d'essai (100) selon au moins l'une des revendications 1 à 4,
**caractérisé en ce que** le moteur de charge (110) est formé comme un moteur synchrone à excitation permanente avec au moins douze paires de pôles magnétiques.

6. Banc d'essai (100) selon la revendication 5,
**caractérisé en ce qu'**un arbre moteur (111) du moteur de charge est formé comme un arbre creux, dans lequel un arbre de transfert (112) est disposé de manière solidaire en rotation.

7. Banc d'essai (100) selon la revendication 6,
**caractérisé en ce que** l'arbre de transfert (112) est relié de manière solidaire en rotation à l'arbre moteur (111) par un capteur de couple de rotation (113).

8. Banc d'essai (100) selon la revendication 7,
**caractérisé en ce que** le capteur de couple de rotation (113) est disposé sur une face frontale du premier moteur de charge (110) opposée à l'élément à tester (140).
